# EUROPEAN PATENT SPECIFICATION

(11) **EP 0 657 899 B1**
(45) Date of publication and mention of the grant of the patent: **08.03.2000**
(21) Application number: 94306610.0
(22) Date of filing: 08.09.1994
(51) Int. Cl.: H01F 1/057

(54) **Iron-based permanent magnet alloy powders for resin bonded magnets and magnets made therefrom**
Dauermagnet-Legierungspulver auf Eisenbasis für harzgebundene Magneten und daraus hergestellte Magneten
Poudres à base de fer à aimantation permanente pour aimants à liant, et aimants de cela

(30) Priority: 10.12.1993 JP 34164693; 10.12.1993 JP 34164893; 10.12.1993 JP 34165093; 15.12.1993 JP 34357593
(43) Date of publication of application: 14.06.1995
(73) Proprietor: SUMITOMO SPECIAL METALS COMPANY LIMITED, Osaka City Osaka (JP)
(72) Inventor: Kanekiyo, Hirokazu, Muko-shi, Kyoto (JP); Hirosawa, Satoshi, Ootsu-shi, Shiga Prefecture (JP)
(74) Representative: Hiltl, Elmar, Dr.

(56) References cited:
- EP-A- 0 542 529
- US-A- 5 022 939
- DIGESTS OF INTERMAG, 13 April 1993, STOCKHOLM SW pages ED01 - ED02 H.KANEKIYO ET AL
- PATENT ABSTRACTS OF JAPAN vol. 16, no. 332 (E-1236) 20 July 1992 & JP-A-04 098 802 (FUJI ELECTROCHEM CO LTD) 31 March 1992

## Description

With the intention of establishing fabrication methods for cheaply produced (Fe,Co)-Cr-B-R-type resin bonded permanent magnets or (Fe,Co)-Cr- B-R-M-type bonded magnets containing few rare earth elements and having a coercive force iHc above 3.98 · 10⁵ A/m (5 kOe and a residual magnetic flux density Br above 0.55 T (5.5 kG) matching the cost performance of hard ferrite magnets, this invention, broadly stated, provides iron-based permanent magnet material consisting of microcrystal clusters where the average crystal size of each component phase is in the range 1 nm to 30 nm and where both a soft magnetic phase consisting of a ferromagnetic alloy whose main components are α-Fe and a ferromagnetic alloy having iron, and a hard magnetic phase having a Nd₂Fe₁₄B-type crystal structure, coexist within the same powder particles.

This is achieved by melt-quenching of a (Fe,Co)-Cr-B-R (where R = Pr, Nd)-type molten alloy or a (Fe,Co)-Cr-B-R-M (where M = Al, Si, S, Ni, Cu, Zn, Ga, Ag, Pt, Au, Pb)-type molten alloy of a particular composition containing few rare earth elements, to obtain an essentially amorphous structure or a structure both amorphous and with small amounts of fine crystals, and by applying a crystallisation heat treatment under specific conditions.

By grinding this iron-based permanent magnet to an average powder particle size of 3 micrometres to 500 micrometres and combining the resultant iron-based permanent magnet alloy powder with a resin, we can obtain an iron-based bonded magnet with good thermal and magnetic properties and with the magnetic characteristics:-
intrinsic coersive force, iHc ≥ 3.98 · 10⁵ A/m (5 kOe),
residual magnetic flux density, Br ≥ 0.55 T (5.5 kG), and with
a magnetic energy, (BH)max ≥ 47.7 kJ/m³ (6MGOe).

### Field of the invention

This invention, relating to iron-based permanent magnets and alloy powders for iron-based bonded magnets and their fabrication, used for obtaining suitable iron-based bonded magnets for all kinds of motors, actuators and magnetic circuits for magnetic sensors, as well as magnetic rolls and speakers, regards iron-based permanent magnets and their fabrication which yield isotropic iron-based bonded magnets having a residual magnetic flux density Br greater than 0.5 T (5 kG) unobtainable from hard ferrite magnets.

### Description of the Prior Art

Permanent magnets used in stepping motors, power motors and actuators utilised in home electronic goods and electric goods in general are mainly limited to hard ferrites, which have various problems such as, demagnetisation at low temperatures with the fall of iHc, the ease of formation of defects, cracks and lowering of mechanical strength due to the quality of a ceramic material, and the difficulty to fabricate complicated forms. These days, along with the miniaturisation of home electronics and OA equipment, small, light-weight magnetic materials to be used in these products are being sought. As for motor vehicles, as much effort is being made towards saving money and resources by making vehicles light- weighted, even more small, light-weight electrical components for motor vehicles are being sought.

As such, efforts are being made to make the efficiency versus weight ratio of magnetic materials as large as possible and, for example, permanent magnets with a residual flux density Br in the range 0.5 ∼ 0.7 T (5 ∼ 7 kG) are thought to be most suitable. In conventional motors, for Br to be above 0.8 T (8 kG), it is necessary to increase the cross section of the iron plate of the rotor or stator which forms the magnetic path, introducing an associated increase in weight. Further, with the miniaturisation of magnets used in magnetic rolls and speakers, an increase in Br is being sought as present hard ferrite magnets cannot give more than 0.5 T (5 kG) Br.

For example, for a Nd-Fe-B-type bonded magnet to satisfy such magnetic characteristics, 10 ∼ 15 at% of Nd needs to be included making their cost incredibly high compared to hard ferrite magnets. Production of Nd metal requires many separation and reduction processes which in turn needs large scale equipment. As well as this, for 90% magnetisation, a magnetic field of close to 1.59 · 10⁶ A/m (20 kOe) is required and there are problems with the magnetisation characteristics such as being unable to achieve complicated multipole magnetisation such that the pitch between the magnetic poles is less than 1.6 mm.

At present, there are no permanent magnet materials with magnetisation characteristics such that Br is 0.5 ∼ 0.7 T (5 ∼ 7 kG) which can be mass produced cheaply.

Recently, a Nd-Fe-B-type magnet has been proposed whose main component is an Fe₃B-type compound with a composition close to Nd₄Fe₇₇B₁₉ (at%) (R. Coehoorn et al., J. de Phys., C8, 1988, 669-670). This permanent magnet has a semi-stable structure with a polycrystalline structure in which a soft magnetic Fe₃B phase and a hard magnetic Nd₂Fe₁₄B phase coexist. However, it is insufficient as a rare earth magnetic material with a low iHc in the range 1.59 · 10⁵ A/m ∼ 2.39 · 10⁵ A/m (2 kOe ∼ 3 kOe), and is unsuitable for industrial use. US 5 022 939 for example discloses a permanent magnet material having a composition represented by the formula RₓT_{(100-x-y-z-w)}B_{y}M_{z}Ni_{w}
wherein R is at least one member selected from the rare earth elements including Y,
T is Fe or a mixture of Fe and Co,
M is at least one member selected from the group consisting of titanium (Ti), vanadium (V), chromium (Cr), zirconium (Zr), niobium (Nb), molybdenum (Mo), hafnium (Hf), tantalum (Ta), and tungsten (W),
B is boron, Ni is nickel,
letters x, y, z, and w represent atom percents of the corresponding elements and have positive values with the proviso that w can be equal to zero,
   5.5 ≤ x < 11.76,
   2 ≤ y < 15,
   0 < z ≤ 15, and
   0 < z + w ≤ 30.

The permanent magnet material consists essentially of a primary phase of substantially tetragonal grain structure, or a primary phase of substantially tetragonal grain structure and at least one R-poor auxiliary phase selected from amorphous and crystalline R-poor auxiliary phases.

Much research is being published, however, on adding additional elements to magnetic materials with Fe₃B-type compounds as their main phase and creating multi-component systems, with the aim to improve their functionality. One such example is to add rare earth elements other than Nd, such as Dy and Tb, which should improve iHc but, apart from the problem of rising material costs from the addition of expensive elements, there is also the problem that the magnetic moment of the added rare earth elements combines antiparallel to the magnetic moment of Nd or Fe, leading to a degradation of the magnetic field and the squareness of the demagnetisation curve (R. Coehoorn, J. Magn. Magn. Mat., 83 (1990) 228-230).

In other work (Shen Bao-gen et al., J. Magn. Magn. Mat., 89 (1991) 335-340), the temperature dependence of iHc was improved by raising the Curie temperature by replacing some Fe with Co, but this also caused a fall in Br on the addition of Co.

In each case, for Nd-Fe-B-type magnets whose main phase is an Fe₃B-type compound, it is possible to create hard magnetic materials with a heat treatment after amorphising by quenching, but their iHc is low and the cost performance of using them instead of hard ferrite magnets is unfavourable. This incapability of providing a high-enough iHc is caused by a large grain size of the soft magnetic phase, typically 50 nm, which is not small enough to effectively prevent magnetisation rotation in the soft magnetic phase from occurring under a demagnetisation field.

### SUMMARY OF THE INVENTION

The purpose of this invention is to provide (Fe,Co)-Cr-B-R-(R = Nd, Pr)-type permanent magnets or (Fe,Co)-Cr-B-R-M (M = Al, Si, S, Ni, Cu, Zn, Ga, Ag, Pt, Au, Pb)-type permanent magnet materials in powder form and iron-based resin bonded magnets fabricated therefrom which can be cheaply produced by stable industrial processes, where these magnets contain few rare earth elements but have a residual magnetic flux density Br above 0.5 T (5 kG) matching hard ferrite magnets in cost performance.

The inventors, as a result of various investigations into possible fabrication methods by stable industrial processes to increase the iHc of iron-based permanent magnetic materials with low rare earth content and containing both soft and hard magnetic phases, have quenched a molten alloy with a specific composition containing few rare earth elements R, comprising one or both of Nd and Pr, and in which Cr, or Cr and M (M = Al, Si, S, Ni, Cu, ZN, Ga, Ag, Pt, Au, Pb) were simultaneously added to an iron-based alloy partially substituted with Co.

The molten alloy may be melt quenched using a rotating roll, by splat quenching, by gas atomising or by a combination of these methods, and, after obtaining an essentially amorphous structure or a structure containing small amounts of micro-crystals dispersed within an amorphous matrix. Then, following a particular heat treatment applied at a particular heating rate, an iron-based permanent magnet material aggregate in ribbon or flake form is obtained, consisting of micro-crystal clusters in which soft magnetic phases containing a ferromagnetic alloy, whose main components are α-Fe and an interemetallic compound with iron as its main phase, and hard magnetic phases, having a Nd₂Fe₁₄B-type crystal structure, coexist.

By grinding and forming an alloy powder of this material to form a bonded magnet, they have completed this invention by obtaining an iron-based resin bonded magnet having a residual magnetic flux density Br above 0.5 T (5 kG), unobtainable with a hard ferrite magnet.

Thus, both soft magnetic phases consisting of a ferromagnetic alloy whose main components are α-Fe and iron-based phase, and hard magnetic phases having a Nd₂Fe₁₄B-type crystal structure will coexist within the same powder particles, and so, for mean crystal particle sizes of each constituent phase in the range of 1 nm ∼ 30 nm, an intrinsic coercive force above the realistically required 3.98 · 10⁵ A/m (5 kOe) is apparent and, by moulding magnetic powder having a particle size of 3 micrometres ∼ 500 micrometres into the required forms using a resin, they can obtain permanent magnets in a usable form.

Preferably, for this invention, after an (Fe,Co)-Cr-B-R-type or (Fe,Co)-Cr-B- R-M (M = Al, Si, S, Ni, Cu, Zn, Ga, Ag, Pt, Au, Pb)-type molten alloy with a particular composition containing few rare earth elements is quenched by melt quenching using a rotating roll, by splat quenching, by gas atomising or by a combination of these methods, and, after an essentially amorphous structure or a structure containing small amounts of microcrystals dispersed within an amorphous matrix has formed, it is crystallised by further special heat treatment.

According to an important aspect of this invention, the crystallisation heat treatment consists in first raising the temperature at a rate of 10°C per minute to 50°C per minute from the temperature at the start of crystallisation, at say about 500°C. A treatment temperature of 600°C ∼ 750°C is then maintained for a time, which may be from ten minutes to ten hours, and is typically six or seven hours, sufficient to achieve crystallization. By this heat treatment there are obtained microcrystal clusters where the mean crystal size of each component phase is in the range 1 nm ∼ 30 nm; and also there is achieved a crystalline aggregate where both a soft magnetic phase consisting of a ferromagnetic alloy whose main components are α-Fe and an intermetallic compound with iron as its main phase, and a hard magnetic phase having a Nd₂Fe₁₄ B-type crystal structure coexist within the same powder particles.

By this procedure iron-based permanent magnet material in ribbon or flake form can be obtained having the following magnetic characteristics.

For the (Fe-Co)Cr-B-R-type,
3.98 · 10⁵ A/m (5 kOe) ≤ iHc ≤ 5.17 · 10⁵ A/m (6.5 kOe),
0.8 T (8 kG) ≤ Br ≤ 1T (10 kG),
79.6 kJ/m³ (10 MGOe) ≤ (BH)max ≤ 95.5 kJ/m³ (12 MGOe);
and in the case of the (Fe-Co)Cr-B-R-M-type,
3.98 · 10⁵ A/m (5 kOe) ≤ iHc ≤ 5.17 · 10⁵ A/m (6.5 kOe),
0.82 T (8.2 kG) ≤ Br ≤ 1.02 T (10.2 kG)
83.6 kJ/m³ (10.5 MGOe) ≤ (BH)max ≤ 99.5 kJ/m³ (12.5 MGOe).

Further, we can obtain iron-based permanent magnet alloy powders suitable for bonded magnets having a residual magnetic flux density Br above 0.5 T (5 kG), by grinding this material as required to a mean powder particle size of 3 micrometers ∼ 500 micrometers and so can obtain iron-based permanent magnet alloy powders having the following magnetic characteristics:-

For the (Fe-Co)Cr-B-R-type powder,
iHc ≥ 3.98 · 10⁵ A/m (5 kOe),
Br ≥ 0.7 T (7.0 kG),
(BH)max ≥ 63.7 kJ/m³ (8 MGOe);
and, in the case of the (Fe-Co)Cr-B-R-M-type powder,
iHc ≥ 3.98 · 10⁵ A/m (5 kOe),
Br ≥ 0.72 T (7.2 kG),
(BH)max ≥ 66.8 kJ/m³ (8.4 MGOe);

Finally, by combining this powder with a resin, we can obtain a bonded magnet with the following magnetic characteristics.
iHc ≥ 3.98 · 10⁵ A/m (5 kOe),
Br ≥ 0.55 T (5.5 kG),
(BH)max ≥ 47.7 kJ/m³ (6 MGOe);

According to one preferred aspect of this invention there is provided a method of producing an alloy powder for bonding with resin to manufacture a rare earth bonded magnet;
the method comprising melting a composition whose formula is represented by
either Fe_{100-x-y-z-a}CrₓB_{y}R_{z}Coₐ
or Fe_{100-x-y-z-a-b}CrₓB_{y}R_{z}CoₐM_{b} (where, R is one or a mixture of Pr and Nd; and where M is one or more of Al, Si, S, Ni, Cu, Zn, Ga, Ag, Pt, Au, Pb),
   and wherein symbols x, y, z, a and b represent restricting composition ranges satisfying the following values,
   0.01 ≤ x ≤ at%;
   15 ≤ y ≤ 30 at%;
   3 ≤ z ≤ 6 at%;
   0.01 ≤ a ≤ 30 at%;
   0.01 ≤ b ≤ 10 at%;
and according to this aspect of the invention, the molten alloy is rapidly quenched so that substantially more than 90% of the solidified alloy is amorphous, and then reheated to a crystallization temperature of from 580°C to 750°C and maintained at this temperature for a period of from ten minutes to ten hours, sufficient to convert the amorphous structure into a crystalline aggregate in which there coexists a soft magnetic phase consisting of α-iron, a ferromagnetic phase containing iron as a main component, and a hard magnetic phase having a Nd₂Fe₁₄B type crystal structure, said crystalline aggregate having an average crystalline particle size of 30 nm or less; and pulverizing the aggregate to produce the powder.

Preferably, after quenching and solidifying of the molten alloy so that the alloy structure is largely amorphous, the alloy is rapidly heated to about 500°C, the temperature then being steadily raised, at a rate of 10°C to 50°C/min, to a crystallization temperature of between 600°C and 750°C.

Preferably also, the crystallization temperature is maintained for from six to seven hours advantageously, in an inert gas atmosphere and/or in a vacuum of a pressure less than 1.33 Pa (10⁻² Torr).

Said rapid quenching and solidification may be achieved by one or both of the melt quenching or gas atomizing procedures.

Such rapid quenching and solidifying is advantageously accomplished with the aid of a rotating roll whose periphery moves at a speed in the range 10 m/sec to 50 m/sec.

The initial melting of the constituent components of the alloy and/or the post quench crystallization heat treatment thereof may be conducted in an atmosphere of an inert gas such as argon; and the latter treatment may be conducted while the alloy is subjected to sub atmospheric pressure.

The pulverization may be effective to obtain a powder having a particle size of from 3 to 500 micrometers. Prior to such pulverization the alloy can be found to have the magnetic properties:-
iHc ≥ 3.98 · 10⁵ A/m (5 kOe),
Br ≥ 0.8 T (8 kG) and
(BH)max ≥ 79.6 kJ/m³ (10 MGOe);

### BRIEF DESCRIPTION OF DRAWINGS

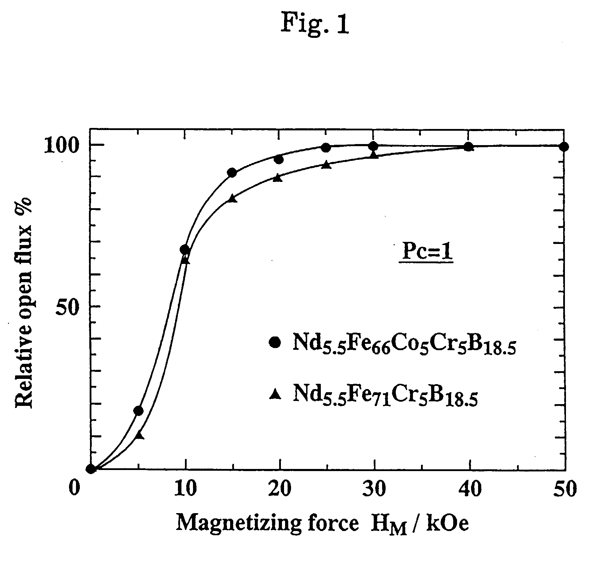

Figure 1 displays a graph showing the magnetisation curve of a bonded magnet, given as an actual example, where this curve has been found by pulse magnetising the magnet from a weak magnetic field in the range 1.59 · 10⁵ A/m ∼ 3.98 · 10⁶ A/m (2 kOe ∼ 50 kOe) and each time measuring the residual magnetic flux density at the open magnetic circuit. By taking the magnetisation measured for the residual magnetic flux density at 3.98 · 10⁶ A/m (50 kOe) as 100%, the magnetization curve is found by estimating the magnetization rate for each magnetization field as a relative ratio of the residual magnetic flux density.

### DETAILED DESCRIPTION OF PREFERRED EMBODIMENTS

The feature of this invention is obtaining an iron-based bonded magnet having a residual magnetic flux density Br above 0.5 T unobtainable with hard ferrite magnets, by quenching a molten alloy of a particular composition containing few rare earth elements in which Cr or Cr and M (M = Al,Si,S,Ni,Cu,Zn,Ga,Ag,Pt,Au,Pb) are simultaneously added to an iron-based alloy partially substituted with Co, by melt quenching using a rotating roll, by splat quenching, by gas atomizing or by a combination of these methods, and, after an essentially amorphous structure or a structure containing small amounts of microcrystals dispersed within an amorphous matrix has formed, obtaining microcrystal clusters where both soft magnetic phases consisting of a ferromagnetic alloy whose main components are α-Fe and an iron-based intermetallic compound, and hard magnetic phases having a Nd₂Fe₁₄B-type crystal structure coexist, by a heat treatment using a particular heating rate.

Below, we give a detailed explanation of the invention's characteristics. One of the focal points of this invention is the grain size of the soft magnetic phase which is to consist the fine crystalline aggregate together with the Nd₂Fe₁₄B type hard magnetic phase. The grain size must be much smaller than 50nm, which is the typical grain size of the previously existing magnet material, eg. Coehoorn et al. (1988). For this purpose, composition and processing method are largely specified as follows.

### Reasons for limiting compositions.

For this invention, we can obtain high magnetization characteristics only when specific amounts of one or two of the rare earth elements R, Pr or Nd are present, while for other rare earths such as Ce and La, we cannot obtain an iHc above 1.59 10⁵ A/m (2 kOe). Sm, and rare earth elements heavier than Sm are undesirable as they bring about a deterioration in the magnetic properties and make the cost of the magnet expensive.

Below a 3 at% fraction of R, there is little crystallization of the R₂Fe₁₄B phase which contributes to the appearance of an intrinsic coercive force and one cannot obtain an iHc above 3.98 · 10⁵ A/m (5.0 kOe). Further, beyond 6 at% we cannot obtain a Br above 0.8 T (8 kG), giving us a composition range of 3 at% - 6 at%. The best range for R is 4 at% - 5.5 at%.

Below a 10 at% fraction of B, we cannot obtain an essentially amorphous structure even using melt-quenching, and we can only obtain an iHc less than 2.39 · 10⁵ A/m (3 kOe) even after heat treatment. Further, as we cannot obtain an iHc above 3.98 · 10⁵ A/m (5 kOe) at a fraction beyond 30 at%, the composition range is 15 at% - 30 at%. The best range for B is 15 at% - 20 at%.

For Cr, adding Cr causes the crystal particles to be about 1/2 - 1/3 times smaller compared to compositions without Cr, and as we can increase the magnetocrystalline anisotropy constant of the R₂Fe₁₄B phase by partially replacing the iron atoms in this hard magnetic phase with Cr, it is effective for raising iHc. This is ineffective, however, for Cr compositions less than 0.01 at%. Further, as Cr couples anti-ferromagnetically with Fe, Br and the squareness of the demagnetization curve is greatly reduced, and so we cannot obtain a Br above 0.8 T (8 kG) with a Cr composition greater than 7 at%. Thus, the Cr composition range is 0.01 at% to 7 at%. To obtain a Br above 0.9 T (9 kG), a composition of 0.01 at% - 3 at% is desirable. To obtain an iHc above 4.77 · 10⁵ A/m (6 kOe) a Cr composition of 3 at% - 7 at% is desirable.

Partially replacing Fe with Co inhibits the loss of magnetization caused by the addition of Cr, and so avoids the great reduction in Br and the squareness of the demagnetization curve while at the same time improving the magnetization characteristics.

Further, partially replacing Fe in the R₂Fe₁₄B phase with Co raises the Curie temperature of that phase and improves the temperature dependence of iHc. This effect cannot be obtained at a Co composition less than 0.01 at%, and as we cannot obtain a Br above 0.8 T (8 kG) beyond a composition of 30 at%, the composition range will be 0.01 at% - 30 at%. The desirable Co composition range is 1 at% - 10 at%.

The elements M (M = Al,Si,S,Ni,Cu,Zn,Ga,Ag,Pt,Au,Pb) are added with the purpose of improving the degradation of the squareness of the demagnetization curve on the addition of Co or Cr and to increase Br and (BH)max. This effect cannot be obtained for a composition less than 0.01 at%, and a composition beyond 10 at% further degrades the squareness and also lowers (BH)max, giving us a composition range of 0.01 at% - 10 at%. The desirable range is 0.5 at% - 3 at%. Fe makes up the remaining composition.

### Reasons for limiting the size of the crystal or powder particles.

The crystal phase of the magnetic powder that constitutes the bonded magnet of this invention will have both a soft magnetic phase consisting of a ferromagnetic alloy whose main components are α-Fe or iron-based intermetallic compound, and a hard magnetic phase having a Nd₂Fe₁₄B-type crystal structure coexisting within the same powder. But without the latter hard magnetic phase, an iHc would not appear.

However, it is insufficient for generating iHc and a good squareness of the hysteresis loop that both soft and hard magnetic phases simply coexist, for if the average crystal particle size for both phases exceeds 80 nm, there will be a degradation of Br and the squareness of the second quadrant of the demagnetization curve, and we cannot generate sufficient flux for a permanent magnet. Although the smaller the average crystal particle size the better, an average crystal particle size of less than 1 nm is difficult to obtain industrially, meaning the average crystal particle size is limited to 1 nm - 30 nm.

For the high precision molding required to make the most of the properties of bonded magnets obtained in complicated or thin forms, the average particle size of the powder must be sufficiently small, as high precision molding cannot be performed for powders larger than 500 micrometers. Also, for sizes less than 3 micrometers, the comparative increase in the surface area means that much resin must be used as a binder, and as it is undesirable for the packing density to be too small, the particle size is limited to 3 micrometers - 500 micrometers.

### Melting, rapid quenching and crystallization heat treatment.

For this invention it is most important that, by rapid solidification of a molten alloy of the particular composition above, once an amorphous structure, or a structure substantially amorphous containing small amounts of microcrystals has formed, and then by performing a crystallization heat treatment where the temperature is raised by between 10°C per minute 50°C per minute from a temperature close to the start of crystallization to a treatment temperature of 600°C - 750°C, one obtains microcrystal clusters where the average crystal size of each component phase is in the range 1 nm - 30 nm and where both soft magnetic phases consisting of a ferromagnetic alloy whose main components are α-Fe or iron-based intermetallic compound and hard magnetic phases having a Nd₂Fe₁₄B-type crystal structure coexist within the same powder particles.

For rapid solidification treatment for the above molten alloy, an melt-quenching method using a rotary roll may be employed if one is able to obtain an essentially amorphous structure or a structure where small amounts of microcrystals are dispersed in amorphous matrix. Methods other than melt-quenching using a rotary roll may also be employed such as splat quenching, gas atomizing or a combination of these techniques.

For example, when using a Cu roll, a circumferential velocity of the rotor in the range of 10m/sec - 50m/sec is desirable as one can obtain a suitable quenched structure. That is, if the surface velocity is less than 10m/sec, we cannot obtain the desired amorphous structure. Further, a circumferential velocity exceeding 50m/sec is undesirable as microcrystal clusters having good hard magnetic properties do not form on crystallization. However, small amounts of α-Fe phase or semi-stable Nd-Fe-B compound within the quenched structure may be permitted as they do not significantly reduce the magnetic characteristics.

For this invention, once an amorphous structure, or a structure both amorphous and containing small amounts of microcrystals has formed after melt - quenching of a molten alloy with a particular composition described above, the heat treatment giving the best magnetic properties depends on the particular composition. Below a heat treatment temperature of 600°C, the Nd₂Fe₁₄B phase does not precipitate and no iHc will be apparent, and for a temperature exceeding 750°C, the particle growth is significant, degrading iHc, Br and the squareness of the demagnetization curve, meaning we cannot obtain the magnetic characteristics described above. Thus, the heat treatment temperature is limited to 600°C - 750°C.

In order to prevent oxidation, a heat treatment atmosphere of either an inert gas such as Ar or N₂ or a vacuum of 1.33 Pa (10⁻² Torr), is desirable.

The magnetic properties of the obtained alloy powder are mostly independent of the heat treatment time, but we can say that after six hours, there is a trend towards a fall in Br with the passage of time, so a heat treatment time of less than six hours is desirable.

The inventors have discovered that the microcrystal structure and their resultant magnetic properties are sensitively dependent on the heating rate used in the heat treatment process. That is, an important process parameter of this invention is the heating rate at which the temperature is raised from a temperature close to that of the start of crystallization during the heat treatment, and if this heating rate velocity is less than 10°C per minute, crystal grain growth occurs during the temperature rise and we cannot obtain microcrystal clusters having good hard magnetic properties, nor an iHc above 3.98 · 10⁵ A/m (5 kOe). Further, if the heating rate exceeds 50°C per minute, insufficient precipitation of the Nd₂Fe₁₄B phase which forms below 600°C occurs, and, not only is iHc reduced, but we have a demagnetization curve with a fall in the magnetization near the Br point of the second quadrant of the magnetization curve, and (BH)max will also fall.

During the heat treatment, up until the temperature of the start of crystallization (about 550°C), one has the option of applying accelerated heating which can raise the treatment efficiency.

### Fabrication of magnets.

By rapid solidification of a molten alloy with a particular composition until an essentially amorphous structure or a structure containing small amounts of microcrystals dispersed within an amorphous matrix has formed, and performing a crystallisation heat treatment where the temperature is raised by between 10°C per minute - 50°C per minute from a temperature close to the start of crystallization to a treatment temperature of 600°C - 750°C, we can obtain iron-based permanent magnet alloy powders with microcrystal clusters with an average crystal size of 1 nm - 30 nm. After grinding this powder to a magnetic powder of between 3 micrometers - 500 micrometers, and by mixing with a known binder, we can obtain a bonded magnet having a residual flux density above 0.55 T (5.5 kG) with approximately 80 % packing density of the magnetic powder in the bonded magnet.

The bonded magnet relating to this invention is an isotropic magnet, and may be fabricated by any of the known methods listed below such as compression molding, injection molding, extrusion molding, roll molding and resin impregnation.

For compression molding, after mixing the magnetic powder into a thermosetting resin, a coupling agent and a lubricating agent, heating up to a setting temperature after compression molding will cause the heated resin to harden.

For injection, extrusion and roll molding, after kneading the magnetic powder into a thermoplastic resin, a coupling agent and a lubricating agent, we can mold by any of the injection, extrusion or roll molding methods.

For resin impregnation, after compression molding the magnetic powder and heat treating as necessary, one can impregnate a thermosetting resin, and the resin will harden on heating. Further, after compression molding the magnetic powder and heat treating as necessary, one can also impregnate a heat plastic resin.

For this invention, the weight ratio of the magnetic powder within the bonded magnet differs from previous fabrications being 70 wt% - 99.5 wt%, the remaining 0.5 wt%- 30 wt% being resin. For compression molding, the desired weight ratio of the magnetic powder is 95 wt% - 99.5 wt%, for injection molding the desired packing ratio of the magnetic powder is 90 wt% - 95 wt%, and for resin impregnation, the desired weight ratio of the magnetic powder is 96 wt% - 99.5 wt%.

For the synthetic resin used for this invention, one can use a resin having either thermosetting or heat plasticity properties, with a thermally stable resin being desirable. For example, we recommend polyamide, polyimide, phenol resin, fluororesin, silicon resin or epoxy resin.

### EXAMPLES

### Example 1

To produce compositions No. 1- 18 shown in Table 1, a total of 30 gr was weighed out using more than 99.5% pure Fe,Co,Cr,B,Nd,Pr,Al,Si,S,Ni,Cu,Zn,Ga,Ag,Pt,Au or Pb metal, placed in a quartz crucible having a 0.08 mm diameter orifice in its base, and melted by high frequency heating under an Ar atmosphere at a pressure of 74.6 kPa (56 cmHg). After reaching a melting temperature of 1400 °C, the molten surface was pressurized by Ar gas, and the molten alloy was injected from a height of 0.7 mm from the outer surface of a Cu roll rotating at a circumferential velocity of 20m/sec at room temperature, forming a melt quenched thin film 2 mm - 4 mm and 20 micrometers - 40 micrometers thick.

The obtained thin film was shown to be amorphous using characteristic Cu Kα x-rays.

The temperature of this thin film was then raised to above 580°C - 600°C, at which crystallization begins, under an Ar atmosphere at the rate shown in Table 1, and then maintained for seven hours at the heat treatment temperature also shown in Table 1. Then, the thin film was cooled to room temperature and removed, forming a sample 2mm - 4mm wide, 20 micrometers - 40 micrometers thick and 3mm - 5mm long. The magnetic characteristics were measured using a VSM, with the results shown in Table 2.

From an investigation of the sample's constituent phrases by characteristic Cu Kα x-rays, when the Cr content is 0.01 at%- 3 at%, we have a multiphase structure with mixed α-Fe, Fe₃B and Nd₂Fe₁₄B phases. When the Cr content is above 3 at%, the main iron components can be confirmed as the α-Fe and Nd₂Fe₁₄B phases, but we cannot confirm the boron compound phases as their quantities are too small. Cr, Co and M (M = Al,Si,S,Ni, Cu,Zn,Ga,Ag,Pt,Au,Pb) partially substitute for Fe in these phases. Further, it was found from transmission electron microscopy pictures that the average crystal size was less than 30 nm for each sample.

After grinding this thin film to obtain magnetic powder with an average size of 150 micrometers, distributed between 25 micrometers - 400 micrometers, and mixing in a ratio of 98% powder and 2% epoxy resin, we obtained a bonded magnet after compression molding at a pressure of 98.1 MPa (6 ton/cm²) and a hardening treatment at 150°C.

This bonded magnet has a density of 6.0 g/cm³ and its magnetic characteristics are shown in Table 3.

### Comparative Example 1

For compositions No. 19 - 24 shown in Table 1, melt quenched thin films were produced under the same conditions as for actual example 1, using 99.5% pure Fe,Co,Cr,B,Nd,Pr and Ni.

As with actual example 1, the temperature of this thin flake was then raised to above 580°C - 600°C, at which crystallization begins, under an Ar atmosphere at the rate shown in Table 1, and then maintained for seven hours at the heat treatment temperature also shown in Table 1, cooled to room temperature and removed, producing a sample 2mm - 4mm wide, 20 micrometers - 40 micrometers thick and 3mm - 5mm long, whose magnetic characteristics were measured using a VSM. These results are shown in Table 2.

From transmission electron microscopy or x-ray analysis, we find sample No. 19 has a multiphase structure of αFe and Nd₂Fe₁₄B phases, with the main phase being the Fe₃B phase. The average crystal particle size is 50 nm, larger compared to the previous samples No. 1 - 18 and is comparable to average grain sizes in multi - phase magnets in the prior art.

Sample No. 20 has a multiphase structure consisting of α-Fe and Nd₂Fe₁₄B phases, and has a microstructure with the average crystal particle size being about 20 nm, the same as actual example 1, but the squareness of the demagnetization curve is degraded compared to sample No. 3, which contains Co. Sample 21 has a large average crystal particle size of 50 nm, and we do not obtain an iHc above 3.98 · 10⁵ A/m (5 kOe).

Sample No. 22 has a multiphase structure with mixed αFe, Fe₃B and Nd₂Fe₁₄B phases, but the growth of the α-Fe phase is significant leading to a demagnetization curve with a fall in the magnetization at the Br point of the second quadrant of the magnetization curve, and we cannot obtain a (BH)max above 79.6 kJ/m³ (10 MGOe).

For sample No. 23, insufficient Nd₂Fe₁₄B phase precipitates for the appearance of a coercive force, and we have no hard magnetism.

Sample No 24 has an average crystal particle size in the range 70nm, with large crystals compared to sample No. 3 of the same composition, and so Br, iHc and (BH)max are degraded when compared to sample No 3.

For samples 19 and 20, after grinding under the same conditions as for actual example 1 and obtaining powders with an average powder particle size of 150 nm they were also made into bonded magnets under the same conditions as for actual example 1. The characteristics of the bonded magnets obtained are shown in Table 3.

### Actual example 2.

On measuring the Curie temperature with a thermomagnetic balance of sample No 3, which has the magnetic characteristics listed in Table 2, we found the presence of a main ferromagnetic phase having a Curie temperature of 849°C and another ferromagnetic phase having a Curie temperature of 388°C. After comparing x-ray analyses, the former is thought to be αFe in a solid solution with Co, and the latter a Nd₂Fe₁₄B type compound (with Fe partially replaced by Co).

### Comparative example 2

On measuring the Curie temperature with a thermomagnetic balance of sample No 20, which has the magnetic characteristics listed in Table 2, we find a mainly ferromagnetic phase with a Curie temperature of 762°C and another ferromagnetic phase with a Curie temperature of 308°C. The Curie temperature of either phase is still a value about 80°C lower than that of sample No. 3 which has Co added.

### Actual example 3

After processing bonded magnet No. 3, which has the magnetic characteristics listed in Table 3, so that the permeance coefficient becomes 1, the magnetization curve, shown in Figure 1, has been found by pulse magnetizing from a weak magnetic field in the range of 1.59 · 10⁵ A/m - 3.98 · 10⁶ A/m (2 kOe - 50 kOe) and each time measuring the residual magnetic flux density of the magnet in the open magnetic configuration. By taking the magnetization rate for the residual magnetic flux density at 3.98 · 10⁶ A/m (50 kOe) as 100%, the curve is found by estimating the magnetization rate for each magnetization field as a relative ratio of the residual magnetic flux density. The magnetic field required for 90% magnetization is about 1.03 10⁶ A/m (13 kOe).

### Comparative example 3

After processing bonded magnet No. 20, which has the magnetic characteristics listed in Table 3, so that the permeance coefficient becomes 1, the magnetization curve was evaluated in the same way as for actual example 3, and shown in Figure 1. The magnetic field required for 90% magnetization is about 1.51 10⁶ A/m (19 kOe), a 4.77 · 10⁵ A/m (6 kOe) larger magnetic field compared to that for bonded magnet No. 3 which has Co added.

As has been made clear from the above actual examples, for this invention, an (Fe,Co)-Cr-B-R-type or (Fe,Co)-Cr-B-R-M (M = Al,Si,S,Ni, Cu,Zn,Ga,Ag,PtAu,Pb)-type molten alloy with a particular composition containing few rare earth elements is quenched by, melt spinning using a rotary roll, by splat quenching, by gas atomizing or by a combination of these methods, and, after an amorphous structure or a structure with both amorphous and with small amounts of microcrystals has formed, by carrying out a heat treatment on the ribbon, flake or spherical aggregate thus obtained, we can obtain microcrystal clusters where the average crystal size of each component phase is in the range 1 nm - 30 nm and where both soft magnetic phases consisting of a ferromagnetic alloy whose main components are α-Fe and iron-based intermetallic compound, and hard magnetic phases having a Nd₂Fe₁₄B-type crystal structure coexist within the same particles.

Here, by simultaneously adding particular amounts of Cr and Co, or Cr, Co and M, we can obtain iron-based permanent magnet material not only with a Br above 0.8 T (8kG) and an iHc above 3.98 · 10⁵ A/m (5 kOe), but also with a good squareness of the second quadrant of the demagnetization curve and with good thermal and magnetization characteristics. By grinding this magnet material as required, we can stably supply in large quantities, Fe-Cr-Co-B-R-M-type, magnet alloy powder with iHc of at least 3.98 · 10⁵ A/m (5 kOe), Br of at least 0.7 T (7 kG) and (BH)max of at least 63.7 kJ/m³ (8 MGOe) having suitable characteristics for forming resin bonded magnets with a residual magnetic flux density Br above 0.5 T (5 kG).

As the quantities of rare earth elements are small, and as the fabrication process can be simply applied to large scale production, this invention can provide bonded magnets with a magnetic efficiency exceeding that of hard ferrite magnets and having an iHc above 3.98 · 10⁵ A/m (5 kOe) and a Br above 0.55 T (5.5 kG). Further, we can shorten the industrial process by complete molding into magnetic parts or magnets, and so these bonded magnets can compare in cost and performance with sintered hard ferrit magnets.

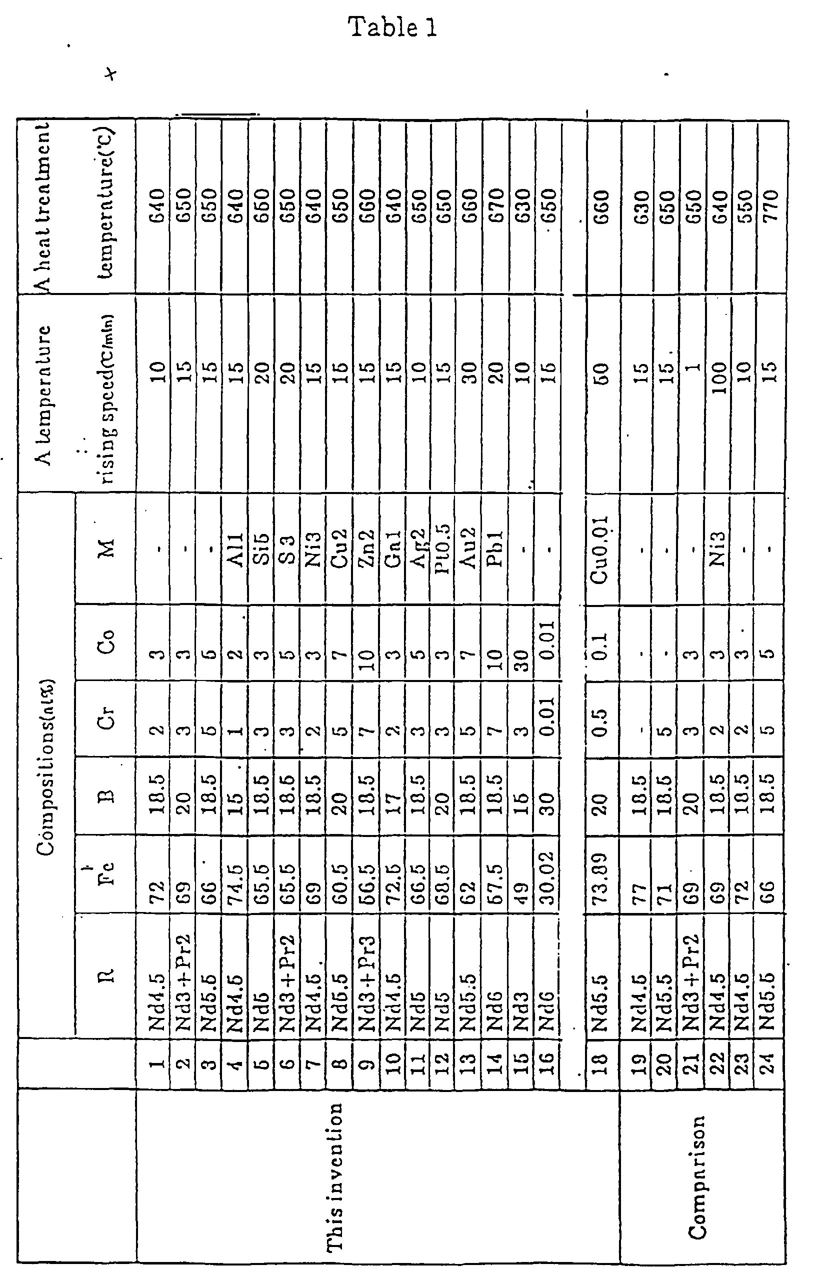

**Table 2**

| | | The magnetic characteristics | | |
|---|---|---|---|---|
| | | Br [T] (kG) | iHc [10⁵ A/m] (kOe) | (BH)max [kJ/m³] (MGOe) |
| This invention | 1 | 1.10 (11.0) | 4.0 (5.0) | 123.3 (15.5) |
| | 2 | 1.03 (10.3) | 4.8 (6.0) | 113.0 (14.2) |
| | 3 | 0.88 (8.8) | 6.2 (7.8) | 95.5 (12.0) |
| | 4 | 1.13 (11.3) | 4.1 (5.2) | 128.1 (16.1) |
| | 5 | 1.07 (10.7) | 4.8 (6.0) | 117.8 (14.8) |
| | 6 | 1.05 (10.5) | 5.0 (6.3) | 115.4 (14.5) |
| | 7 | 1.12 (11.2) | 4.2 (5.3) | 125.7 (15.8) |
| | 8 | 0.90 (9.0) | 6.4 (8.1) | 98.7 (12.4) |
| | 9 | 0.81 (8.1) | 8.1 (10.2) | 82.8 (10.4) |
| | 10 | 1.14 (11.4) | 4.1 (5.2) | 127.3 (16.0) |
| | 11 | 1.07 (10.7) | 5.0 (6.3) | 118.6 (14.9) |
| | 12 | 1.05 (10.5) | 4.9 (6.1) | 114.6 (14.4) |
| | 13 | 0.92 (9.2) | 6.4 (8.0) | 100.3 (12.6) |
| | 14 | 0.83 (8.3) | 8.0 (10.0) | 85.2 (10.7) |
| | 15 | 1.04 (10.4) | 4.0 (5.0) | 109.0 (13.7) |
| | 16 | 0.91 (9.1) | 4.1 (5.2) | 89.9 (11.3) |
| | | | | |
| | 18 | 1.08 (10.8) | 4.4 (5.5) | 113.0 (14.2) |
| Comparison | 19 | 1.20 (12.0) | 2.8 (3.5) | 87.5 (11.0) |
| | 20 | 0.83 (8.3) | 5.9 (7.4) | 77.2 (9.7) |
| | 21 | 0.97 (9.7) | 3.3 (4.2) | 69.2 (8.7) |
| | 22 | 1.05 (10.5) | 3.7 (4.6) | 74.0 (9.3) |
| | 23 | 0.34 (3.4) | | |
| | 24 | 0.42 (4.2) | 2.7 (3.4) | 19.9 (2.5) |

**Table 3**

| | | The magnetic characteristics | | |
|---|---|---|---|---|
| | | Br [T] (kG) | iHc [10⁵ A/m] (kOe) | (BH)max [kJ/m³] (MGOe) |
| This invention | 1 | 0.79 (7.9) | 4.0 (5.0) | 74.0 (9.3) |
| | 2 | 0.74 (7.4) | 4.8 (6.0) | 67.6 (8.5) |
| | 3 | 0.63 (6.3) | 6.2 (7.8) | 57.3 (7.2) |
| | 4 | 0.81 (8.1) | 4.1 (5.2) | 77.2 (9.7) |
| | 5 | 0.77 (7.7) | 4.8 (6.0) | 70.8 (8.9) |
| | 6 | 0.76 (7.6) | 5.0 (6.3) | 69.2 (8.7) |
| | 7 | 0.81 (8.1) | 4.2 (5.3) | 75.6 (9.5) |
| | 8 | 0.65 (6.5) | 6.4 (8.1) | 58.9 (7.4) |
| | 9 | 0.58 (5.8) | 8.1 (10.2) | 49.3 (6.2) |
| | 10 | 0.82 (8.2) | 4.1 (5.2) | 76.4 (9.6) |
| | 11 | 0.77 (7.7) | 5.0 (6.3) | 70.8 (8.9) |
| | 12 | 0.76 (7.6) | 4.9 (6.1) | 68.4 (8.6) |
| | 13 | 0.66 (6.6) | 6.4 (8.0) | 60.5 (7.6) |
| | 14 | 0.60 (6.0) | 8.0 (10.0) | 50.9 (6.4) |
| | 15 | 0.77 (7.7) | 4.0 (5.0) | 57.3 (7.2) |
| | 16 | 0.67 (6.7) | 4.1 (5.2) | 48.5 (6.1) |
| | | | | |
| | 18 | 0.84 (8.4) | 4.4 (5.5) | 59.7 (7.5) |
| Comparison | 19 | 0.86 (8.6) | 2.8 (3.5) | 52.5 (6.6) |
| | 20 | 0.60 (6.0) | 5.9 (7.4) | 42.2 (5.3) |

## Claims

1. An iron-based permanent magnet material consisting of a fine crystal aggregate composed of mutually distributed magnetically soft phases and a hard magnetic phase,
whose compositional formula is represented by
either Fe_{100-x-y-z-a}CrₓB_{y}R_{z}Coₐ
or Fe_{100-x-y-z-a-b}CrₓB_{y}R_{z}CoₐM_{b}
(where, R is one or a mixture of Pr and Nd; and where M is one or more of Al, Si, S, Ni, Cu, Zn, Ga, Ag, Pt, Au, Pb),
and wherein symbols x, y, z, a and b represent restricting composition ranges satisfying the following values,
0.01 ≤ x ≤ 7 at%
15 ≤ y ≤ 30 at%
3 ≤ z ≤ 6 at%
0.01 ≤ a ≤ 30 at%
0.01 ≤ b ≤ 10 at%
and wherein said soft magnetic phase and said hard magnetic phase coexist in the same crystalline aggregate, provided that said soft magnetic phase consists of α-iron and a ferromagnetic phase mainly containing iron, with said hard magnetic phase having a Nd₂Fe₁₄B type crystal structure,
and wherein mean particle size of the crystalline aggregate is within the range of 1 nm to 30 nm.

2. An iron-based permanent magnet material according to claim 1 whose compositional formula is represented by
Fe_{100-x-y-z-a}CrₓB_{y}R_{z}Coₐ
and wherein symbols x, y, z and a represent restricting composition ranges satisfying the following values,
0.01 ≤ x ≤ 3 at%
15 ≤ y ≤ 20 at%
4 ≤ z ≤ 5.5 at%
1 ≤ a ≤ 10 at%
and wherein a soft magnetic phase consisting of α-iron and a ferromagnetic phase containing iron as a main component and a hard magnetic phase having a Nd₂Fe₁₄B type crystal structure coexist in the crystalline aggregate, and wherein mean particle size of the crystalline aggregate is within the range 1 nm to 30 nm, and wherein the magnetic characteristics are:
3.98·10⁵ A/m (5 kOe) ≤ iHc ≤ 5.17·10⁵ A/m (6.5 kOe),
Br > 1 T (10 kG),
(BH)max > 95.5 kJ/m³ (12 MGOe).

3. An iron-based permanent magnet material according to claim 1 whose compositional formula is represented by
Fe_{100-x-y-z-a}CrₓB_{y}R_{z}Coₐ
and wherein symbols x, y, z and a represent restricting composition ranges satisfying the following values,
3 ≤ x ≤ 7 at%
15 ≤ y ≤ 20 at%
4 ≤ z ≤ 5.5 at%
1 ≤ a ≤ 10 at%
and wherein a soft magnetic phase consisting of α-iron and a ferromagnetic phase containing iron as a main component and a hard magnetic phase having a Nd₂Fe₁₄B type crystal structure coexist in the crystalline aggregate, and wherein mean particle size of the crystalline aggregate is within the range 1 nm to 30 nm, and wherein the magnetic characteristics are:
iHc > 5.17·10⁵ A/m (6.5 kOe),
0.8 T (8kG) ≤ Br ≤ 1 T (10 kG),
79.6 kJ/m³ (10 MGOe) ≤ (BH)max ≤ 95.5 kJ/m³ (12 MGOe).

4. An iron-based permanent magnet material according to claim 1 whose compositional formula is represented by
Fe_{100-x-y-z-a-b}CrₓB_{y}R_{z}CoₐM_{b}
and wherein symbols x, y, z, a and b represent restricting composition ranges satisfying the following values,
0.01 ≤ x ≤ 3 at%
15 ≤ y ≤ 20 at%
4 ≤ z ≤ 5.5 at%
1 ≤ a ≤ 10 at%
0.5 ≤ b ≤ 3 at%
and wherein a soft magnetic phase consisting of α-iron and a ferromagnetic phase containing iron as a main component and a hard magnetic phase having a Nd₂Fe₁₄B type crystal structure coexist in the crystalline aggregate, and wherein mean particle size of the crystalline aggregate is within the range 1 nm to 30 nm, and wherein the magnetic characteristics are:
3.98·10⁵ A/m (5kOe) ≤ iHc ≤ 5.17·10⁵A/m (6.5 kOe),
Br > 1.02 T (10.2 kG),
(BH)max > 99.5 kJ/m³ (12.5 MGOe).

5. An iron-based permanent magnet material according to claim 1 whose compositional formula is represented by
Fe_{100-x-y-z-a-b}CrₓB_{y}R_{z}CoₐM_{b}
and wherein symbols x, y, z, a and b represent restricting composition ranges satisfying the following values,
3 ≤ x ≤ 7 at%
15 ≤ y ≤ 20 at%
4 ≤ z ≤ 5.5 at%
1 ≤ a ≤ 10 at%
0.5 ≤ b ≤ 3 at%
and wherein a soft magnetic phase consisting of α-iron and a ferrromagnetic phase containing iron as a main component and a hard magnetic phase having a Nd₂Fe₁₄B type crystal structure coexist in the crystalline aggregate, and wherein mean particle size of the crystalline aggregate is within the range 1 nm to 30 nm, and wherein the magnetic characteristics are:
iHc > 5.17·10⁵ A/m (6.5 kOe),
0.82 T (8.2 kG) ≤ Br ≤ 1.02 T (10.2 kG),
83.6 kJ/m³ (10.5 MGOe) ≤ (BH)max ≤ 99.5 kJ/m³ (12.5 MGOe).

6. An iron-based permanent magnet material according to claim 1 having the magnetic characteristics:
iHc ≥ 3.98·10⁵ A/m (5 kOe),
Br ≥ 0.8 T (8 kG),
and
(BH)max ≥ 79.6 kJ/m³ (10 MGOe).

7. An iron-based permanent magnet material according to claim 1 whose compositional formula is represented by
Fe_{100-x-y-z-a}CrₓB_{y}R_{z}Coₐ
and wherein symbols x, y, z, and a represent restricting composition ranges satisfying the following values,
0.01 ≤ x ≤ 7 at%
15 ≤ y ≤ 30 at%
3 ≤ z ≤ 6 at%
0.01 ≤ a ≤ 30 at%
and wherein after the material has been pulverized into a powder which has a mean particle size of 3 micrometres to 500 micrometres, it has magnetic characteristics of
iHc ≥ 3.98·10⁵ A/m (5 kOe),
Br ≥ 0.7 T (7 kG),
(BH)max ≥ 63.7 kJ/m³ (8 MGOe).

8. An iron-based permanent magnet material according to claim 1 whose compositional formula is represented by
Fe_{100-x-y-z-a-b}CrₓB_{y}R_{z}CoₐM_{b}
and wherein symbols x, y, z, a and b represent restricting composition ranges satisfying the following values,
0.01 ≤ x ≤ 7 at%
15 ≤ y ≤ 30 at%
3 ≤ z ≤ 6 at%
0.01 ≤ a ≤ 30 at%
0.01 ≤ b ≤ 10 at%
and wherein after the material has been pulverized into a powder which has a mean particle size of 3 micrometers to 500 micrometers, it has magnetic characteristics of
iHc ≥ 3.98·10⁵ A/m (5 kOe),
Br ≥ 0.72 T (7.2 kG),
(BH)max ≥ 66.8 kJ/m³ (8.4 MGOe).

9. A resin-banded permanent magnet obtainable by using the permanent magnet material according to claim 1,
whereby the material having been pulverized into a powder which has a mean particle size of 3 micrometers to 500 micrometers and then fabricated to shape by bonding with resin to produce a resin bonded permanent magnet having the magnetic characteristics:
iHc ≥ 3.98·10⁵ A/m (5 kOe),
Br ≥ 0.55 T (5.5 kG),
(BH)max ≥ 47.7 kJ/m³ (6 MGOe).

10. A method of producing an alloy powder for bonding with resin to manufacture a rare earth bonded magnet; the method comprising melting a composition whose formula is represented by
either
Fe_{100-x-y-z-a}CrₓB_{y}R_{z}Coₐ
or
Fe_{100-x-y-z-a-b}CrₓB_{y}R_{z}CoₐM_{b}
(where R is one or a mixture of Pr and Nd; and where M is one or more Al, Si, S, Ni, Cu, Zn, Ga, Ag, Pt, Au, Pb),
and wherein symbols x, y, z, a and b represent restricting composition ranges satisfying the following values,
0.01 ≤ x ≤ 7 at%
15 ≤ y ≤ 30 at%
3 ≤ z ≤ 6 at%
0.01 ≤ a ≤ 30 at%
0.01 ≤ b ≤ 10 at%
characterized in that the molten alloy is rapidly quenched so that substantially more than 90% of the solidified alloy is amorphous, and then reheated to a crystallization temperature of from 580°C to 750°C and held at this temperature for a period of from ten minutes to ten hours, sufficient to convert the substantially amorphous structure into a crystalline aggregate in which there coexists a soft magnetic phase consisting of α-iron, a ferromagnetic phase containing iron as a main component, and a hard magnetic phase having a Nd₂Fe₁₄B type crystal structure, said crystalline aggregate having an average crystalline particle diameter of 1 nm to 30 nm; and pulverizing the aggregate to produce the powder.

11. A method according to claim 10 and wherein said rapid solidification is achieved by one or both of the melt quenching or gas atomizing procedures.

12. A method according to either of the preceding claims 10 or 11 and wherein the heat treatment is conducted in an atmosphere of argon.

13. A method according to any one of the preceding claims 10 to 12 and wherein the aggregate is pulverized to produce a powder having a particle size of from 3 to 500 micrometers.

14. A method according to any one of the preceding claims 10 to 13 and wherein the rapid quenching and solidifying is accomplished with the aid of a roll rotating at a speed in the range 10 m/sec to 50 m/sec.

15. A method according to any one of claims 10 to 14, and wherein after quenching and solidifying of the molten alloy so that the alloy structure is largely amorphous, the alloy is rapidly heated to about 500°C, the temperature then being steadily raised, at a rate of 10°C to 50°C/min, to a crystallization temperature of between 600°C and 750°C.

16. A method according to claim 15, wherein the crystallization temperature is held for from six to seven hours in an inert gas atmosphere and/or in a vacuum of a pressure less than 1.333 Pa (10⁻² Torr).

17. A method, according to any of claims 10 to 16, wherein
the molten material is processed, first by a rapid solidification process, into an amorphous material or a material in which a little amount of fine crystals and amorphous coexist, and then by a heat treatment, whereby at heat treatment for crystallisation of an amorphous alloy, the crystallising heat treatment is performed with a heating rate between 10°C/min and 50°C/min from near the temperature at which crystallisation starts to an isothermal heat treatment temperature to produce magnetically hard material wherein a soft magnetic phase consisting of α-iron and a ferromagnetic alloy having iron as a main component and a hard magnetic phase having a Nd₂Fe₁₄B type crystal structure coexist in the same particle, and, wherein the mean crystal particle size of the constituent phases is within the range of 1 nm to 30 nm.

18. A method for manufacturing an iron-based permanent magnet material in accordance with claim 17, whereby a ribbon flake or powder amorphous alloy obtained by a melt-quenching process, a splat quenching process, a gas atomising process or their combined process is used as a heat treatment precursor material.

19. A method for manufacturing an iron-based permanent magnet material in accordance with claim 17, whereby the crystallising heat treatment is performed at 600°C to 750°C in an inert gas atmosphere or in a vacuum of a pressure less than 1.333 Pa (10⁻² Torr).

20. A rare earth bonded magnet when made from resin bonded with a powder of the permanent magnet material produced by the method defined in any one of the preceding claims 10 to 19.

## Patentansprüche

1. Permanentmagnetmaterial auf der Basis von Eisen, bestehend aus einem Feinkristallaggregat aus gemeinsam verteilten magnetisch weichen Phasen und einer Hartmagnetphase,
wobei die Zusammensetzungsformel dargestellt ist durch
entweder Fe_{100-x-y-z-a}CrₓB_{y}R_{z}Coₐ
oder Fe_{100-x-y-z-a-b}CrₓB_{y}R_{z}CoₐM_{b}
(wobei R eines oder eine Mischung aus Pr und Nd ist; und wobei es sich bei M um eines oder mehrere von Al, Si, S, Ni, Cu, Zn, Ga, Ag, Pt, Au, Pb handelt),
und wobei die Symbole x, y, z, a und b einschränkende Zusammensetzungsbereiche darstellen, welche die folgenden Werte erfüllen:
0,01 ≤ x ≤ 7 at%
15 ≤ y ≤ 30 at%
3 ≤ z ≤ 6 at%
0,01 ≤ a ≤ 30 at%
0,01 ≤ b ≤ 10 at%
und wobei die Weichmagnetphase und die Hartmagnetphase in demselben kristallinen Aggregat koexistieren, vorausgesetzt daß die Weichmagnetphase aus einem α-Eisen und einer ferromagnetischen Phase mit haupsächlich Eisen besteht, wobei die Hartmagnetphase eine Kristallstruktur vom Nd₂Fe₁₄B-Typ aufweist,
und wobei die Durchschnittspartikelgröße des kristallinen Aggregats im Bereich von 1 nm bis 30 nm liegt.

2. Permanentmagnetmaterial auf der Basis von Eisen gemäß Anspruch 1, dessen Zusammensetzungsformel dargestellt ist durch
Fe_{100-x-y-z-a}CrₓB_{y}R_{z}Coₐ,
und wobei die Symbole x, y, z und a einschränkende Zusammensetzungsbereiche darstellen, welche die folgenden Werte erfüllen:
0,01 ≤ x ≤ 3 at%
15 ≤ y ≤ 20 at%
4 ≤ z ≤ 5,5 at%
1 ≤ a ≤ 10 at%
und wobei eine Weichmagnetphase bestend aus α-Eisen und einer ferromagnetischen Phase mit Eisen als Hauptbestandteil und eine Hartmagnetphase mit einer Kristallstruktur vom Nd₂Fe₁₄B-Typ in dem kristallinen Aggregat koexistieren, und wobei die Durchschnittspartikelgröße des kristallinen Aggregats im Bereich von 1 nm bis 30 nm liegt, und wobei die magnetischen Eigenschaften wie folgt sind:
3,98·10⁵ A/m (5 kOe) ≤ iHc ≤ 5,17·10⁵ A/m (6,5 kOe),
Br > 1 T (10 kG),
(BH)max > 95,5 kJ/m³ (12 MGOe).

3. Permanentmagnetmaterial auf der Basis von Eisen gemäß Anspruch 1, dessen Zusammensetzungsformel dargestellt ist durch
Fe_{100-x-y-z-a}CrₓB_{y}R_{z}Coₐ,
und wobei die Symbole x, y, z und a einschränkende Zusammensetzungsbereiche darstellen, welche die folgenden Werte erfüllen:
3 ≤ x ≤ 7 at%
15 ≤ y ≤ 20 at%
4 ≤ z ≤ 5,5 at%
1 ≤ a ≤ 10 at%
und wobei eine Weichmagnetphase bestend aus α-Eisen und einer ferromagnetischen Phase mit Eisen als Hauptbestandteil und eine Hartmagnetphase mit einer Kristallstruktur vom Nd₂Fe₁₄B-Typ in dem kristallinen Aggregat koexistieren, und wobei die Durchschnittspartikelgröße des kristallinen Aggregats im Bereich von 1 nm bis 30 nm liegt, und wobei die magnetischen Eigenschaften wie folgt sind:
iHc > 5,17·10⁵ A/m (6,5 kOe),
0,8 T (8kG) ≤ Br ≤ 1 T (10 kG),
79,6 kJ/m³ (10 MGOe) ≤ (BH)max ≤ 95,5 kJ/m³ (12 MGOe).

4. Permanentmagnetmaterial auf der Basis von Eisen gemäß Anspruch 1, dessen Zusammensetzungsformel dargestellt ist durch
Fe_{100-x-y-z-a-b}CrₓB_{y}R_{z}CoₐM_{b},
und wobei die Symbole x, y, z, a und b einschränkende Zusammensetzungsbereiche darstellen, welche die folgenden Werte erfüllen:
0,01 ≤ x ≤ 3 at%
15 ≤ y ≤ 20 at%
4 ≤ z ≤ 5,5 at%
1 ≤ a ≤ 10 at%
0,5 ≤ b ≤ 3 at%
und wobei eine Weichmagnetphase bestend aus α-Eisen und einer ferromagnetischen Phase mit Eisen als Hauptbestandteil und eine Hartmagnetphase mit einer Kristallstruktur vom Nd₂Fe₁₄B-Typ in dem kristallinen Aggregat koexistieren, und wobei die Durchschnittspartikelgröße des kristallinen Aggregats im Bereich von 1 nm bis 30 nm liegt, und wobei die magnetischen Eigenschaften wie folgt sind:
3,98·10⁵ A/m (5kOe) ≤ iHc ≤ 5,17·10⁵A/m (6,5 kOe),
Br > 1,02 T (10,2 kG),
(BH)max > 99,5 kJ/m³ (12,5 MGOe).

5. Permanentmagnetmaterial auf der Basis von Eisen gemäß Anspruch 1, dessen Zusammensetzungsformel dargestellt ist durch
Fe_{100-x-y-z-a-b}CrₓB_{y}R_{z}CoₐM_{b},
und wobei die Symbole x, y, z, a und b einschränkende Zusammensetzungsbereiche darstellen, welche die folgenden Werte erfüllen:
3 ≤ x ≤ 7 at%
15 ≤ y ≤ 20 at%
4 ≤ z ≤ 5,5 at%
1 ≤ a ≤ 10 at%
0,5 ≤ b ≤ 3 at%
und wobei eine Weichmagnetphase bestend aus α-Eisen und einer ferromagnetischen Phase mit Eisen als Hauptbestandteil und eine Hartmagnetphase mit einer Kristallstruktur vom Nd₂Fe₁₄B-Typ in dem kristallinen Aggregat koexistieren, und wobei die Durchschnittspartikelgröße des kristallinen Aggregats im Bereich von 1 nm bis 30 nm liegt, und wobei die magnetischen Eigenschaften wie folgt sind:
iHc > 5,17·10⁵ A/m (6,5 kOe),
0,82 T (8,2 kG) ≤ Br ≤ 1,02 T (10,2 kG),
83,6 kJ/m³ (10,5 MGOe) ≤ (BH)max ≤ 99,5 kJ/m³ (12,5 MGOe).

6. Permanentmagnetmaterial auf der Basis von Eisen gemäß Anspruch 1 mit folgenden magnetischen Eigenschaften:
iHc ≥ 3,98·10⁵ A/m (5 kOe),
Br ≥ 0,8 T (8 kG),
und
(BH)max ≥ 79,6 kJ/m³ (10 MGOe).

7. Permanentmagnetmaterial auf der Basis von Eisen gemäß Anspruch 1, dessen Zusammensetzungsformel dargestellt ist durch
Fe_{100-x-y-z-a}CrₓB_{y}R_{z}Coₐ,
und wobei die Symbole x, y, z und a einschränkende Zusammensetzungsbereiche darstellen, welche die folgenden Werte erfüllen:
0,01 ≤ x ≤ 7 at%
15 ≤ y ≤ 30 at%
3 ≤ z ≤ 6 at%
0,01 ≤ a ≤ 30 at%
und wobei, nachdem das Material zu einem Pulver mit einer durschnittlichen Partikelgröße von 3 Mikrometern bis 500 Mikrometern pulverisiert wurde, es folgende magnetische Eigenschaften aufweist:
iHc ≥ 3,98·10⁵ A/m (5 kOe),
Br ≥ 0,7 T (7 kG),
(BH)max ≥ 63,7 kJ/m³ (8 MGOe).

8. Permanentmagnetmaterial auf der Basis von Eisen gemäß Anspruch 1, dessen Zusammensetzungsformel dargestellt ist durch
Fe_{100-x-y-z-a-b}CrₓB_{y}R_{z}CoₐM_{b},
und wobei die Symbole x, y, z, a und b einschränkende Zusammensetzungsbereiche darstellen, welche die folgenden Werte erfüllen:
0,01 ≤ x ≤ 7 at%
15 ≤ y ≤ 30 at%
3 ≤ z ≤ 6 at%
0,01 ≤ a ≤ 30 at%
0,01 ≤ b ≤ 10 at%
und wobei, nachdem das Material zu einem Pulver mit einer durschnittlichen Partikelgröße von 3 Mikrometern bis 500 Mikrometern pulverisiert wurde, es folgende magnetische Eigenschaften aufweist:
iHc ≥ 3,98·10⁵ A/m (5 kOe),
Br ≥ 0,72 T (7,2 kG),
(BH)max ≥ 66,8 kJ/m³ (8,4 MGOe).

9. Harzgebundener Permanentmagnet, erhältlich durch Verwendung des Permanentmagnetmaterials gemäß Anspruch 1,
wobei das Material, das zu einem Pulver mit einer durschnittlichen Partikelgröße von 3 Mikrometern bis 500 Mikrometern pulverisiert wurde und dann durch Bindung mit Harz zur Herstellung eines harzgebundenen Permanentmagneten in Form gebracht wurde, folgende magnetische Eigenschaften aufweist:
iHc ≥ 3,98·10⁵ A/m (5 kOe),
Br ≥ 0,55 T (5,5 kG),
(BH)max ≥ 47,7 kJ/m³ (6 MGOe).

10. Verfahren zur Herstellung eines Legierungspulvers zur Bindung mit Harz zur Herstellung eines seltenerdgebundenen Magneten; wobei das Verfahren das Schmelzen einer Zusammensetzung umfaßt, deren Formel dargestellt wird durch:
entweder
Fe_{100-x-y-z-a}CrₓB_{y}R_{z}Coₐ
oder
Fe_{100-x-y-z-a-b}CrₓB_{y}R_{z}CoₐM_{b}
(wobei R eines oder eine Mischung aus Pr und Nd ist; und wobei es sich bei M um eines oder mehrere von Al, Si, S, Ni, Cu, Zn, Ga, Ag, Pt, Au, Pb handelt),
und wobei die Symbole x, y, z, a und b einschränkende Zusammensetzungsbereiche darstellen, welche die folgenden Werte erfüllen:
0,01 ≤ x ≤ 7 at%
15 ≤ y ≤ 30 at%
3 ≤ z ≤ 6 at%
0,01 ≤ a ≤ 30 at%
0,01 ≤ b ≤ 10 at%
dadurch gekennzeichnet, daß die geschmolzene Legierung rasch abgeschreckt wird, so daß im wesentlichen mehr als 90% der erstarrten Legierung amorph sind, und dann erneut auf eine Kristallisationstemperatur von 580°C bis 750°C erwärmt wird und auf dieser Temperatur über eine Zeitdauer von zehn Minuten bis zehn Stunden gehalten wird, ausreichend zur Umwandlung der im wesentlichen amorphen Struktur in ein kristallines Aggregat, worin eine Weichmagnetphase bestehend aus α-Eisen, einer ferromagnetischen Phase mit Eisen als Hauptbestandteil, und eine Hartmagnetphase mit einer Kristallstruktur vom Nd₂Fe₁₄B-Typ koexistiert, wobei das kristalline Aggregat einen Durchschnittskristallpartikeldurchmesser von 1 nm bis 30 nm aufweist; und Pulversieren des Aggregats zur Herstellung des Pulvers.

11. Verfahren gemäß Anspruch 10 und wobei die rasche Erstarrung durch ein oder mehrere Verfahren ausgewählt aus Schmelzabschrecken und Gasatomisieren erreicht wird.

12. Verfahren gemäß einem der vorhergehenden Ansprüche 10 oder 11, und wobei die Wärmebehandlung in einer Argonatmosphäre erfolgt.

13. Verfahren gemäß einem der vorhergehenden Ansprüche 10 bis 12, und wobei das Aggregat zur Herstellung eines Pulvers mit einer Partikelgröße von 3 bis 500 Mikrometern pulversiert wird.

14. Verfahren gemäß einem der vorhergehenden Ansprüche 10 bis 13, und wobei das rasche Abschrecken und Erstarren mit Hilfe einer Walze erreicht wird, welche sich mit einer Geschwindigkeit im Bereich von 10 m/sec bis 50 m/sec dreht.

15. Verfahren gemäß einem der Ansprüche 10 bis 14, und wobei nach dem Abschrecken und Erstarren der geschmolzenen Legierung, so daß die Legierungsstruktur größtenteils amorph ist, die Legierung rasch auf etwa 500°C erwärmt wird, wobei die Temperatur dann ständig erhöht wird, bei einer Rate von 10°C bis 50°C/Minute, auf eine Kristallisationstemperatur zwischen 600°C und 750°C.

16. Verfahren gemäß Anspruch 15, wobei die Kristallisationstemperatur sechs bis sieben Stunden in einer Inertgasatmosphäre und/oder in einem Vakuum mit einem Druck von weniger als 1,333 Pa (10⁻² Torr) gehalten wird.

17. Verfahren gemäß einem der Ansprüche 10 bis 16, wobei
das geschmolzene Material verarbeitet wird, erst durch ein rasches Erstarrungsverfahren, in ein amorphes Material oder ein Material, worin eine geringe Menge feiner Kristalle und amorphem Material koexistieren, und dann durch eine Wärmebehandlung, wobei bei der Wärmebehandlung zur Kristallisierung einer amorphen Legierung die Kristallisierungswärmebehandlung mit einer Erwärmungsrate zwischen 10°C/Min. und 50°C/Min. von nahe der Temperatur, bei welcher die Kristallisation beginnt, bis zu einer isothermen Wärmebearbeitungstemperatur zur Herstellung von magnetisch hartem Material erfolgt, wobei eine Weichmagnetphase bestehend aus α-Eisen und einer ferromagnetischen Legierung mit Eisen als Hauptbestandteil und eine Hartmagnetphase mit einer Kristallstruktur vom Nd₂Fe₁₄B-Typ in demselben Partikel koexistieren, und, wobei die Durschnittskristallpartikelgröße der Bestandteilphasen im Bereich von 1 nm bis 30 nm liegt.

18. Verfahren zur Herstellung eines Permanentmagnetmaterials auf der Basis von Eisen gemäß Anspruch 17, wobei eine amorphe Legierung in Band-, Flocken- oder Pulverform, erhalten durch ein Schmelzabschreckverfahren, ein Spritzabschreckverfahren, ein Gasatomisierungsverfahren oder kombinierte Verfahren hiervon als Wärmebehandlungsvorläufermaterial verwendet wird.

19. Verfahren zur Herstellung eines Permanentmagnetmaterials auf der Basis von Eisen gemäß Anspruch 17, wobei die Kristallisierungswärmebehandlung bei 600°C bis 750°C in einer Inertgasatmosphäre oder in einem Vakuum von einem Druck von weniger als 1,333 Pa (10⁻² Torr) erfolgt.

20. Seltenderdgebundener Magnet, wenn aus Harz hergestellt, gebunden mit einem Pulver des Permanentmagnetmaterials, hergestellt durch das Verfahren gemäß einem der vorhergehenden Ansprüche 10 bis 19.

## Revendications

1. Matériau d'aimant permanent, à base de fer, consistant en un agrégat de fins cristaux constitué de phases magnétiquement douces mutuellement réparties et d'une phase magnétique dure,
dont la formule de composition est représentée par
soit Fe_{100-x-y-z-a}CrₓB_{y}R_{z}Coₐ
soit Fe_{100-x-y-z-a-b}CrₓB_{y}R_{z}CoₐM_{b}
(dans laquelle R représente un des éléments ou un mélange des éléments Pr et Nd ; et M représente un ou plusieurs des éléments Al, Si, S, Ni, Cu, Zn, Ga, Ag, Pt, Au, Pb),
et dans laquelle les symboles x, y, z, a et b représentent les intervalles restrictifs de composition satisfaisant les valeurs suivantes
0,01 ≤ x ≤ 7 % at.
15 ≤ y ≤ 30 % at.
3 ≤ z ≤ 6 % at.
0,01 ≤ a ≤ 30 % at.
0,01 ≤ b ≤ 10 % at.
et dans lequel ladite phase magnétique douce et ladite phase magnétique dure coexistent dans le même agrégat cristallin, sous réserve que ladite phase magnétique douce consiste en fer α et une phase ferromagnétique contenant principalement du fer, ladite phase magnétique dure ayant une structure cristalline du type Nd₂Fe₁₄B,
et dans lequel le diamètre moyen de particules de l'agrégat cristallin est compris dans l'intervalle de 1 nm à 30 nm.

2. Matériau pour aimant permanent, à base de fer, suivant la revendication 1, dont la formule de composition est représentée par
Fe_{100-x-y-z-a}CrₓB_{y}R_{z}Coₐ
dans laquelle les symboles x, y, z, et a représentent les intervalles restrictifs de composition satisfaisant les valeurs suivantes
0,01 ≤ x ≤ 3 % at.
15 ≤ y ≤ 20 % at.
4 ≤ z ≤ 5,5 % at.
1 ≤ a ≤ 10 % at.
et dans lequel une phase magnétique douce consistant en fer α et une phase ferromagnétique contenant du fer comme constituant principal et une phase magnétique dure ayant une structure cristalline de type Nd₂Fe₁₄B coexistent dans l'agrégat cristallin, et dans lequel le diamètre moyen de particules de l'agrégat cristallin est compris dans l'intervalle de 1 nm à 30 nm, et dont les caractéristiques magnétiques sont les suivantes :
3,98·10⁵ A/m (5 kOe) ≤ iHc ≤ 5,17·10⁵ A/m (6,5 kOe),
Br > 1 T (10 kG),
(BH)max > 95,5 kJ/m³ (12 MGOe).

3. Matériau pour aimant permanent, à base de fer, suivant la revendication 1, dont la formule de composition est représentée par
Fe_{100-x-y-z-a}CrₓB_{y}R_{z}Coₐ
dans laquelle les symboles x, y, z, et a représentent les intervalles restrictifs de composition satisfaisant les valeurs suivantes
3 ≤ x ≤ 7 % at.
15 ≤ y ≤ 20 % at.
4 ≤ z ≤ 5,5 % at.
1 ≤ a ≤ 10 % at.
et dans lequel une phase magnétique douce consistant en fer α, une phase ferromagnétique contenant du fer comme constituant principal et une phase magnétique dure ayant une structure cristalline de type Nd₂Fe₁₄B coexistent dans l'agrégat cristallin, et dans lequel le diamètre moyen de particules de l'agrégat cristallin est compris dans l'intervalle de 1 nm à 30 nm, dont les caractéristiques magnétiques sont les suivantes :
iHc > 5,17·10⁵ A/m (6,5 kOe),
0,8 T (8kG) ≤ Br ≤ 1 T (10 kG),
79,6 kJ/m³ (10 MGOe) ≤ (BH)max ≤ 95,5 kJ/m³ (12 MGOe).

4. Matériau pour aimant permanent, à base de fer, suivant la revendication 1, dont la formule de composition est représentée par
Fe_{100-x-y-z-a-b}CrₓB_{y}R_{z}CoₐM_{b}
dans laquelle les symboles x, y, z, a et b représentent les intervalles restrictifs de composition satisfaisant les valeurs suivantes
0,01 ≤ x ≤ 3 % at.
15 ≤ y ≤ 20 % at.
4 ≤ z ≤ 5,5 % at.
1 ≤ a ≤ 10 % at.
0,5 ≤ b ≤ 3 % at.
et dans lequel une phase magnétique douce consistant en fer α, une phase ferromagnétique contenant du fer comme constituant principal et une phase magnétique dure ayant une structure cristalline de type Nd₂Fe₁₄B coexistent dans l'agrégat cristallin, et dans lequel le diamètre moyen de particules de l'agrégat cristallin est compris dans l'intervalle de 1 nm à 30 nm, dont les caractéristiques magnétiques sont les suivantes :
3,98·10⁵ A/m (5kOe) ≤ iHc ≤ 5,17·10⁵A/m (6,5 kOe),
Br > 1,02 T (10,2 kG),
(BH)max > 99,5 kJ/m³ (12,5 MGOe).

5. Matériau pour aimant permanent, à base de fer, suivant la revendication 1, dont la formule de composition est représentée par
Fe_{100-x-y-z-a-b}CrₓB_{y}R_{z}CoₐM_{b}
dans laquelle les symboles x, y, z, a et b représentent les intervalles restrictifs de composition satisfaisant les valeurs suivantes
3 ≤ x ≤ 7 % at.
15 ≤ y ≤ 20 % at.
4 ≤ z ≤ 5,5 % at.
1 ≤ a ≤ 10 % at.
0,5 ≤ b ≤ 3 % at.
et dans lequel une phase magnétique douce consistant en fer α, une phase ferromagnétique contenant du fer comme constituant principal et une phase magnétique dure ayant une structure cristalline de type Nd₂Fe₁₄B coexistent dans l'agrégat cristallin, et dans lequel le diamètre moyen de particules de l'agrégat cristallin est compris dans l'intervalle de 1 nm à 30 nm, dont les caractéristiques magnétiques sont les suivantes :
iHc > 5,17·10⁵ A/m (6,5 kOe),
0,82 T (8,2 kG) ≤ Br ≤ 1,02 T (10,2 kG),
83,6 kJ/m³ (10,5 MGOe) ≤ (BH)max ≤ 99,5 kJ/m³ (12,5 MGOe).

6. Matériau pour aimant permanent, à base de fer, suivant la revendication 1, ayant les caractéristiques magnétiques suivantes :
iHc ≥ 3,98·10⁵ A/m (5 kOe),
Br ≥ 0,8 T (8 kG),
et
(BH)max ≥ 79,6 kJ/m³ (10 MGOe).

7. Matériau pour aimant permanent, à base de fer, suivant la revendication 1, dont la formule de composition est représentée par
Fe_{100-x-y-z-a-b}CrₓB_{y}R_{z}Coₐ
dans laquelle les symboles x, y, z et a représentent les intervalles restrictifs de composition satisfaisant les formules suivantes
0,01 ≤ x ≤ 7 % at.
15 ≤ y ≤ 30 % at.
3 ≤ z ≤ 6 % at.
0,01 ≤ a ≤ 30 % at.
ce matériau, après pulvérisation en une poudre ayant un diamètre moyen de particules de 3 micromètres à 500 micromètres, ayant les caractéristiques magnétiques suivantes
iHc ≥ 3,98·10⁵ A/m (5 kOe),
Br ≥ 0,7 T (7 kG),
(BH)max ≥ 63,7 kJ/m³ (8 MGOe).

8. Matériau pour aimant permanent, à base de fer, suivant la revendication 1, dont la formule de composition est représentée par
Fe_{100-x-y-z-a-b}CrₓB_{y}R_{z}CoₐM_{b}
dans laquelle les symboles x, y, z, a et b représentent les intervalles restrictifs de composition satisfaisant les valeurs suivantes
0,01 ≤ x ≤ 7 % at.
15 ≤ y ≤ 30 % at.
3 ≤ z ≤ 6 % at.
0,01 ≤ a ≤ 30 % at.
0,01 ≤ b ≤ 10 % at.
ce matériau, après pulvérisation en une poudre ayant un diamètre moyen de particules de 3 micromètres à 500 micromètres, ayant les caractéristiques magnétiques suivantes
iHc ≥ 3,98·10⁵ A/m (5 kOe),
Br ≥ 0,72 T (7,2 kG),
(BH)max ≥ 66,8 kJ/m³ (8,4 MGOe).

9. Aimant permanent renfermant un liant consistant en une résine, pouvant être obtenu en utilisant le matériau pour aimant permanent suivant la revendication 1,
ce matériau ayant été pulvérisé en une poudre ayant un diamètre moyen de particules de 3 micromètres à 500 micromètres et ayant été ensuite façonné par liaison avec une résine pour produire un aimant permanent lié avec une résine, ayant les caractéristiques magnétiques suivantes :
iHc ≥ 3,98·10⁵ A/m (5 kOe),
Br ≥ 0,55 T (5,5 kG),
(BH)max ≥ 47,7 kJ/m³ (6 MGOe).

10. Procédé pour la production de poudre d'alliage pour la liaison avec une résine afin de produire un aimant lié renfermant un élément faisant partie des terres rares, procédé qui comprend la fusion d'une composition dont la formule est représentée par
Fe_{100-x-y-z-a-b}CrₓB_{y}R_{z}Coₐ
soit
Fe_{100-x-y-z-a-b}CrₓB_{y}R_{z}CoₐM_{b}
(dans laquelle R représente un des éléments ou un mélange des éléments consistant en Pr et Nd ; et M représente un ou plusieurs des éléments Al, Si, S, Ni, Cu, Zn, Ga, Ag, Pt, Au, Pb),
et dans laquelle les symboles x, y, z, a et b représentent les intervalles restrictifs de composition satisfaisant les valeurs suivantes
0,01 ≤ x ≤ 7 % at.
15 ≤ y ≤ 30 % at.
3 ≤ z ≤ 6 % at.
0,01 ≤ a ≤ 30 % at.
0,01 ≤ b ≤ 10 % at.
caractérisé en ce que l'alliage fondu est rapidement soumis à une trempe de telle sorte qu'une quantité nettement supérieure à 90 % de l'alliage solidifié soit amorphe, puis est chauffé à nouveau à une température de cristallisation comprise dans l'intervalle de 580°C à 750°C et est maintenu à cette température pendant une période de temps de 10 minutes à 10 heures, suffisante pour transformer la structure essentiellement amorphe en un agrégat cristallin dans lequel coexistent une phase magnétique douce consistant en fer α, une phase ferromagnétique contenant du fer comme constituant principal et une phase magnétique dure ayant une structure cristalline de type Nd₂Fe₁₄B, ledit agrégat cristallin ayant un diamètre moyen de particules cristallines de 1 nm à 30 nm ; et la pulvérisation de l'agrégat pour produire la poudre.

11. Procédé suivant la revendication 10, dans lequel la solidification rapide est effectuée par l'un des, ou les deux, modes opératoires consistant en une trempe en masse fondue ou une atomisation en présence d'un gaz.

12. Procédé suivant l'une des revendications 10 et 11 précédentes, dans lequel le traitement thermique est effectué dans une atmosphère d'argon.

13. Procédé suivant l'une quelconque des revendications 10 à 12 précédentes, dans lequel l'agrégat est pulvérisé pour produire une poudre ayant un diamètre de particules de 3 à 500 micromètres.

14. Procédé suivant l'une quelconque des revendications 10 à 13 précédentes, dans lequel la trempe rapide et la solidification sont effectuées au moyen d'un rouleau tournant à une vitesse comprise dans l'intervalle de 10 m/s à 50 m/s.

15. Procédé suivant l'une quelconque des revendications 10 à 14 précédentes, dans lequel, après la trempe et la solidification de l'alliage fondu de telle sorte que l'alliage soit essentiellement amorphe, l'alliage est chauffé rapidement à environ 500°C, la température étant ensuite élevée de manière régulière, à une vitesse de 10°C à 50°C/min, jusqu'à une température de cristallisation comprise dans l'intervalle de 600°C à 750°C.

16. Procédé suivant la revendication 15, dans lequel la température de cristallisation est maintenue pendant un temps de 6 à 7 heures dans une atmosphère d'un gaz inerte et/ou sous un vide correspondant à une pression inférieure à 1,333 Pa (10⁻² torr).

17. Procédé suivant l'une quelconque des revendications 10 à 16, dans lequel le matériau fondu est traité, tout d'abord par un procédé de solidification rapide, en un matériau amorphe ou un matériau dans lequel une petite quantité de fins cristaux et le matériau amorphe coexistent, puis par un traitement thermique, le traitement thermique pour la cristallisation d'un alliage amorphe étant effectué à une vitesse d'élévation de température comprise dans l'intervalle de 10°C/min à 50°C/min d'une température proche de la température à laquelle la cristallisation débute jusqu'à une température de traitement thermique isotherme pour produire un matériau magnétiquement dur dans lequel une phase magnétique douce consistant en fer α et un alliage ferromagnétique renfermant du fer comme constituant principal et une phase magnétique dure ayant une structure cristalline du type Nd₂F₁₄B coexistent dans la même particule, et dans lequel le diamètre moyen de particules cristallines des phases constitutives est compris dans l'intervalle de 1 nm à 30 nm.

18. Procédé pour la production d'un matériau pour aimant permanent, à base de fer, suivant la revendication 17, dans lequel un alliage amorphe en ruban, en paillettes ou en poudre, obtenu par un procédé de trempe en masse fondue, un procédé de trempe par jet de gaz, un procédé d'atomisation en présence d'un gaz ou un procédé mixte qui en dérive, est utilisé comme matériau précurseur pour le traitement thermique.

19. Procédé pour la production d'un matériau pour aimant permanent, à base de fer, suivant la revendication 17, dans lequel le traitement thermique de cristallisation est effectué à une température comprise dans l'intervalle de 600°C à 750°C dans une atmosphère de gaz inerte ou sous un vide correspondant à une pression inférieure à 1,333 Pa (10⁻² torr).

20. Aimant lié, renfermant un élément faisant partie des terres rares, produit à partir d'une résine liée avec une poudre du matériau pour aimant permanent produit par le procédé répondant à la définition suivant l'une quelconque des revendications 10 à 19 précédentes.
